# EUROPEAN PATENT APPLICATION

(11) **EP 4 462 343 A1**
(43) Date of publication of application: **13.11.2024**
(21) Application number: 23173168.8
(22) Date of filing: 12.05.2023
(51) Int. Cl.: G06Q 40/08, G06Q 30/0601, G06Q 30/0251

(54) **DATA MANAGEMENT SYSTEM AND METHOD OF USE THEREOF**

(71) Applicant: Rnwl Ltd, Cambridge CB4 0WS (GB)
(72) Inventor: Teixeira de Vasconcelos, Goncalo, Cambridge, CB1 3DW (GB); Hay, James, Cambridge, CB4 3EX (GB); Forest, Jason, Cambridge, CB21 4LH (GB); Codrai, Ryan, London, W14 0NS (GB)
(74) Representative: Basck Limited

(57) **Abstract**

There is provided a data management system that is configured as an insurance management system (100). The insurance management system comprises a processing arrangement and a user interface (200, 400, 500). The processing arrangement is configured to: gather user data comprising information (110) about at least one of user profile, existing insurance policies, insurance preferences, and assets of a given user; and generate an insurance profile (104) of the given user (106) based on the user data. The user interface is configured to display the insurance profile of the given user, including details of the existing insurance policies and one or more user interface elements for receiving one or more user actions for managing of the existing insurance policies. There is also provided a method for using the aforementioned data management system to manage insurance requirements for a user.

## Description

### TECHNICAL FIELD

The present disclosure relates to a data management system; for example, the present disclosure relates to a data management system that is configured as an insurance management system. Moreover, the present disclosure relates to a method for using the data management system to manage data of a given user; for example, the present disclosure relates to a method for managing data representative of insurance requirements for the given user. Furthermore, the present disclosure relates to a software product that is executable on computing hardware of the aforesaid data management system to implement the aforesaid method.

### BACKGROUND

It is known to use multiple data processing elements to process diverse input data obtained from a given real physical system to generate corresponding filtered output data that may be used in various ways to influence or control operation of the given real physical system. Such processing may be implemented by filtering the input data using specific algorithms to achieve a desired technical effect.

*Mutatis mutandis,* the insurance industry makes use of configurations of data management systems that are often mutually incompatible in respect of how their data is structured, or are hindered by their operators from sharing data therebetween. Such incompatibility results in technical problems for insurers using the data management systems, and also for insured users or potential users or customers using the data management systems. Typically, a given insured user encounters challenges to maintain its insurance profile records, terms and conditions of its insurance policies bought or being projected thereto, its renewal dates, and so on. As far the insurance industries are concerned, such challenges result in a lower accuracy of profile data submitted by users, and also more "friction" for users to interact with insurance services.

Another technical issue is that user data is not easily shared between a plurality of insurance service providers, either as a result of data format incompatibility or as a reluctance of the service providers. Such reluctance of the insurance service providers to share data with one another makes it difficult for users to compare prices and coverage from different insurance service providers; such a lack of sharing user data results in the users needing to re-enter their data with respect to each new insurance service provider in order to create a user profile each for each of the new insurance service provider. It will be appreciated that a given user having all the user's required data saved with one insurance provider does not mean the given user may transfer that data to another insurance provider. Thereby, making the entire data entry process a time-consuming and an inefficient process.

In the insurance industry, users do not have control over aspects of their own data, as the data are controlled by insurance service providers and associated industry bodies. This means that users are often required to re-enter their data each time they want to obtain prices from other insurance service providers, making obtaining insurance quotes both laborious and time-consuming. For example, the Motor Insurers' Bureau is an industry body that shares some user insurance profile data among multiple insurance service providers, wherein the profile data includes existing user insurer or claims history for example. Often, the profile data is limited to car insurance, wherein only some data are shared, with no user access or control. Thus, conventional management systems fail to effectively serve a basic purpose of maintaining a good coordination between the users and one or more insurance service providers.

Moreover, as the existing insurance comparison services currently work on simple user input, automatic data collection from other data sources (such as existing policy information) and storage of data from users while interacting with a new insurance service provider are not possible. In this regard, providing user data is laborious and manual and typically relies heavily on long forms to be completed or updated by users. Some insurance comparison sites offer "auto quote" to fill out a form. However, such "auto-quote" may retrieve data from an outdated information source, such as that added about a year ago, and often requires a lot of user input (and careful checking) to amend to get a valid insurance quote. Additionally, there may be only limited information, or even no information, shared between when seeking to obtain quotes for different types or lines of insurance.

Furthermore, known insurance comparison services also present problems for users, as they do not compare a given user's existing product, meaning that all the work of assessing whether new deals are better or worse falls on the given user. This may potentially lead to users overpaying for insurance or purchasing policies that do not provide adequate coverage by simply choosing a cheapest possible policy from an insurance service provider that they have encountered, besides wasting time and mental energy on switching to new insurance service providers. In addition, insurance service providers are unable to compete on much besides price, and known insurance comparison services do not compare much beyond price. Moreover, the ability to compare prices across different types or lines of insurance is limited, as quotes are typically siloed by type or line of insurance. Hence, known insurance service providers are unable to assess users' overall needs, as they may only quote for the type or line of insurance being requested. It will be appreciated that the effect of aforesaid problems is significant for both users and the insurance industry, wherein vulnerable users are particularly at risk of being affected by these problems.

### SUMMARY

The present disclosure seeks to provide an improved method for using a data management system configured as an insurance management system for managing user insurance requirements. Moreover, the present disclosure seeks to provide a data management system configured as an insurance management system to implement the method. An aim of the present disclosure is to provide a solution that overcomes the problems encountered in aforesaid prior art; in particular, the present disclosure seeks to provide an improved method and system for gathering a full and complete insurance profile relating to a given user; providing to a user, via a single dashboard application, consolidated information about multiple ongoing insurance policies associated with the user and potential insurance policies beneficial therefor; and providing to an insurance service provider access to a user insurance profile.

In a first aspect, the present disclosure provides a data management system configured as an insurance management system comprising:
- a processing arrangement configured to:
   - gather user data comprising information about at least one of user profile, existing insurance policies, insurance preferences, and assets of a given user;
   - generate an insurance profile of the given user based on the user data; and
- a user interface configured to display the insurance profile of the given user, including details of the existing insurance policies and one or more user interface elements for receiving one or more user actions for managing the existing insurance policies.

The data management system of the present disclosure comprises multiple data processing elements that are configured to interact to gather, process and distribute the data of the given user in a highly efficient manner that provides for the multiple data processing elements to function together in a compatible manner.

In a second aspect, the present disclosure provides a method for using a data management system configured as an insurance management system to manage insurance requirements for a given user, the method comprising:
- gathering user data comprising information about at least one of user profile, existing insurance policies, insurance preferences, and assets of the given user;
- generating an insurance profile of the given user based on the user data; and
- displaying the insurance profile of the given user, including details of the existing insurance policies and one or more user interface elements for receiving one or more user actions for managing of the existing insurance policies.

Embodiments of the present disclosure substantially eliminate, or at least partially address, the aforementioned problems in the prior art, namely addressing interaction incompatibilities between mutually different elements of a data management system, thereby improving accuracy of user data, and enabling creation of a centralized data management system, such as insurance management system, which is accessible to a plurality of consumers, namely insurance service providers and users, through application programming interfaces (APIs). Moreover, the insurance management system is user-friendly and allows for easy data sharing between insurance service providers, giving users control of their own data, and enabling more efficient and accurate comparison of different insurance policies. Additionally, the insurance management system is robust, cost-effective and user friendly.

Additional aspects, advantages, features and objects of the present disclosure would be made apparent from the drawings and the detailed description of the illustrative embodiments construed in conjunction with the appended claims that follow.

In a third aspect, a software product that is executable on computing hardware, wherein the software product is configured to cause the computing hardware to implement the method as described in the above aspects.

It will be appreciated that features of the present disclosure are susceptible to being combined in various combinations without departing from the scope of the present disclosure as defined by the appended claims.

### BRIEF DESCRIPTION OF THE DRAWINGS

The summary above, as well as the following detailed description of illustrative embodiments, is better understood when read in conjunction with the appended drawings. For the purpose of illustrating the present disclosure, exemplary constructions of the disclosure are shown in the drawings. However, the present disclosure is not limited to specific methods and instrumentalities disclosed herein. Moreover, those skilled in the art will understand that the drawings are not to scale. Wherever possible, like elements have been indicated by identical numbers.

Embodiments of the present disclosure will now be described, by way of example only, with reference to the following diagrams wherein:
FIG. 1 is a schematic illustration of an environment of a data management system configured as an insurance management system, according to an embodiment of the present disclosure;
FIG. 2 is an illustration of a user interface, according to an embodiment of the present disclosure;
FIG. 3 is a block diagram of a process for extracting information from the user data, according to an embodiment of the present disclosure;
FIG. 4 is a schematic illustration of a user interface for user data input required by the data management system, according to an embodiment of the present disclosure;
FIG. 5 is an exemplary illustration of a user interface for comparison of two policies, according to an embodiment of the present disclosure; and
FIG. 6 is a flowchart depicting steps of a method for using a data management system configured as an insurance management system to manage insurance requirements for a user, in accordance with an embodiment of the present disclosure.

In the accompanying drawings, an underlined number is employed to represent an item over which the underlined number is positioned or an item to which the underlined number is adjacent. A non-underlined number relates to an item identified by a line linking the non-underlined number to the item. When a number is non-underlined and accompanied by an associated arrow, the non-underlined number is used to identify a general item at which the arrow is pointing.

### DETAILED DESCRIPTION OF EMBODIMENTS

The following detailed description illustrates embodiments of the present disclosure and ways in which they may be implemented. Although some modes of carrying out the present disclosure have been disclosed, those skilled in the art would recognize that other embodiments for carrying out or practicing the present disclosure are also possible.

In a first aspect, the present disclosure provides a data management system configured as an insurance management system comprising:
- a processing arrangement configured to:
   - gather user data comprising information about at least one of user profile, existing insurance policies, insurance preferences, and assets of a given user; ands
   - generate an insurance profile of the given user based on the user data; and
- a user interface configured to display the insurance profile of the given user, including details of the existing insurance policies and one or more user interface elements for receiving one or more user actions for managing of the existing insurance policies.

The present disclosure provides the aforementioned data management system configured as an insurance management system and method for using the data management system to manage insurance requirements for a given user. The said insurance management system provides a consolidated insurance profile of the given user with user controls on access thereof. Moreover, the insurance management system comprises a central insurance profile that stores a given user's existing insurance policy data, asset data and other data necessary to get quotes. Beneficially, all of the given user's existing insurance policy data are consolidated (in form of, for example, an insurance wallet), and details of each of the insurance policy data are available for viewing/editing to the given user on selection made by the given user of a desired insurance policy data. Moreover, the insurance management system is configured to store the given user's insurance profile in an encrypted cloud database and is access-controlled by the given user unlike known conventional systems. Moreover, the given user's insurance profile is made available to insurance applications offered by multiple application providers via an API based on user-granted permissions, allowing the given user to access their insurance profile data via their chosen application providers. The insurance applications may then use the available data to provide helpful services to the given user. Beneficially, the helpful services may include, but are not limited to, reminders of upcoming renewals, quotes for the given user to switch product or insurance service provider with minimal new data input required, and services based on asset data held (e.g., vehicle inspection booking for a vehicle or listing household items with a police database). Advantageously, the insurance management system is user-friendly and enables the given user to input easily the insurance profile. In this regard, the given user may send information in one or more formats, and an information extraction pipeline processes emails and documents to identify relevant attributes that may help complete the insurance profile for the given user based on the user-entered information and in some cases calls to third party APIs (e.g., driving licence lookup) to further add to data provided by the given user.

Moreover, for the benefit of users, the insurance management system enables promoting ongoing monitoring of insurance policies, such as tracking of dates, and an understanding of how a current policy compares, thereby decreasing the friction associated with comparing and purchasing insurance by unlocking advanced personalised selection of insurance products. Additionally, the insurance management system provides advantages to insurance service providers by providing access to user insurance profiles via APIs, with no user input being required. This accessibility removes barriers to users switching between service providers. Furthermore, this access enables the insurance service providers to serve better their consumers by knowing their profile and needs, eventually leading to better consumer retention through providing an improved purchase experience. Moreover, the insurance service providers benefit by being able to selectively message to users who stand to benefit from their products (either on features or price or both) and avoiding spamming those who do not stand to benefit.

Herein, the given user is a human being or a legal entity. It will be appreciated that, when the user is an entity, when the user is required to perform a task, a person associated with the entity performs it on behalf of that entity. The term "insurance service provider" is a company or organization that offers insurance services to individuals or businesses. They may provide insurance products, administer policies, or handle claims on behalf of the insurance company. Typically, the insurance service provider includes insurance companies, insurance brokers, agents, insurance aggregators and insurance comparison services.

The term "application provider" refers to a company or organization that offers users access to the insurance management system, whether in whole or in part. Application providers may include, but are not limited to, insurers, insurance brokers, agents, banks, other financial service companies, organizations with existing mobile or web applications or properties and publishing organizations (e.g., blogs, news or advice websites) that wish to provide such tools and functionality to their users.

Herein the term "insurance management system" refers to a data management system that is configured to manage insurance data, such as insurance policies, user details, details of insurance service providers, and so on. Optionally, the managed insurance data may include information extraction from available data (typically, user input data, data from a third party, cloud servers, and so on), data sharing, serving customers (namely, users and insurance service providers) based on that data and associated helpful services based on that data. In other words, the insurance management system is configured to manage insurance requirements related to insurance policies, details of their associated insurance service providers and users, terms and conditions of the insurance policies, and so forth. Accordingly, the insurance management system serves to maintain a relationship between the users and the insurance service providers as well as between the users and any application provider that is providing the insurance management system.

The term "processing arrangement" as used herein refers to a set of algorithms, a software application, a software product, a computer program, a process, or a computing device that responds to requests for information or services by another application, program, process or device (such as the external device) via a network interface. Optionally, the processing arrangement also encompasses software that makes an act of serving information or providing services possible. A communication means of an external device (such as user device) may be compatible with a communication means of the processing arrangement, in order to facilitate communication therebetween. Optionally, the processing arrangement uses information processing paradigms such as artificial intelligence (AI) including techniques such as natural language processing, machine learning, deep learning, information retrieval, machine translation, computer vision, cognitive modelling, Hidden Markov models, Boltzmann machines, Born machines and neural networks for performing various tasks associated with managing insurance requirements for a user.

The term "application programming interface" (API) as used herein refers to an interface that enables two or more computer programs to communicate with each other. It is implemented as a type of software interface, providing a service to other software products. An API often includes a plurality of mutually different parts which act as tools or services (these different parts being known as "endpoints") that are available to a program or a programmer connecting to it. A program or a programmer that uses one of these parts is said to call that portion of the API. In the present context, a system comprises its own API that is made available to third parties (as an "API provider") to access data and functionality held within the system. The system also interacts with third party APIs (as an "API consumer") to access their data and functionality.

The term "user interface" as used herein refers to an arrangement that allows a display unit of a given user's computing device to display content. Suitably, the user interface is generally rendered upon the display unit. Optionally, the user interface has a customisable aesthetic appearance.

The user's computing device may be configured to obtain a user input of one or more characters in a data field rendered within the user interface and communicate the user input to a server. Examples of the user's computing device may include, but are not limited to, a mobile computing device, a smartphone, a desktop computer, a laptop computer, a tablet computer, a thin client or other user computing devices.

The communication means, optionally including its associated communication network, includes a medium (e.g., a communication channel) through which the user's computing device communicates with the processing arrangement and the processing arrangement interacts with third-party APIs and the user device. The communication network may be a wired or wireless communication network. Examples of the communication means may include, but are not limited to, the Internet, a Local Area Network (LAN), a wireless personal area network (WPAN), a Wireless Local Area Network (WLAN), a wireless wide area network (WWAN), a cloud network, a Long-Term Evolution (LTE) network, a plain old telephone service (POTS) and a Metropolitan Area Network (MAN).

The aforesaid processing arrangement is configured to gather user data comprising information about at least one of user profile, existing insurance policies, insurance preferences, and assets of a given user. The term "user data" as used herein refers to information relating to, or required for, a quote for a type of insurance policy held by the user when the user is insured, or desired by user when the user is uninsured or intending to switch insurance provider. Information about a "user profile" of a user may comprise data such as the user's date of birth, the user's home address and the user's profession. The information about the user's existing insurance policies may comprise details about the type of insurance, an insurance service provider, an insurance policy number, an insurance starting date, an insurance renewal date, an amount paid, claims information, features and coverage of the insurance policy, and so forth. Information about "insurance preferences" may include both a user's objective requirements (for example, in the case motor insurance, that the vehicle is kept on a driveway and is used for business as well as for social use), as well as user-specified preferences (for example, in the case of motor insurance, stated preferences for comprehensive cover, no voluntary excess, cover that includes driving abroad and a preference to protect the user's no claims discount earned thus far). The term "assets of the user" refers to the assets owned by the user that are insurable under various insurance categories including, but not limited to, motor insurance, buildings insurance, and home contents insurance. The assets may thus include a vehicle, a bicycle, a house, a house loan, an air conditioner, a refrigerator, and so on. Typically, the user data may be gathered through various data capture means such as forms in web or mobile applications, surveys, through users submitting data via email (or other messaging services) or through gathering data via APIs (either as an API provider or consumer). In an example, gathering the user data comprises requesting the users to provide the data, or fetching the data from third party servers that store user data from various sources.

Optionally, the user data is stored in an encrypted database that may be hosted in the cloud.

Optionally, while gathering the user data, the processing arrangement is configured to request the given user to send information related to at least one of the existing insurance policies; receive the information related to at least one of the existing insurance policies from the user; and process the information related to at least one of the existing insurance policies by implementing one or more of: text extraction techniques and information extraction techniques, to extract the user data therefrom. The user may send information related to at least one of the existing insurance policies in a structured, unstructured or semi-structured manner, such as via text documents, PDF documents, emails or other message types (e.g., SMS or other messaging or chat application), any attachments to such messages, manual entry in a prescribed form within a mobile app or website, scanning and uploading pre-filled hard-copy forms to a mobile app or website, and so on. The received information is processed, by the processing arrangement, to extract relevant information, namely the user data, from the data sent by the user. In this regard, conventional text extraction techniques and information extraction techniques may be employed for extraction of user data from the structured, unstructured or semi-structured data sources such as form data, text, documents and images sent by the user. In this regard, initially text extraction techniques are employed to extract text from the provided information followed by information extraction techniques that identify/extract relevant information from the extracted text. The term "information extraction" refers to an automated retrieval of specific information related to a selected topic from a body or bodies of text.

Typically, the relevant information may include, but is not limited to, a named entity (such as people, organizations, locations), a part-of-speech tag (e.g. noun, verb, adjective), a sentiment (such as positive, negative, or neutral), co-references or synonyms (i.e., two or more words referring to the same entity), and a summary (i.e., by grouping relevant text).

Typically, in this regard, the text extraction technique is employed to parse data sources to output plain text data by performing layout analysis, classification/categorisation of sections, headings and paragraphs, identification of document reading order, identification of tables, and so on; such parsing may be understood to be a form of data filtering. The information extraction technique (such as general extraction techniques (for example, rules-based or a trained deep learning model) or attribute-specific techniques) is subsequently employed to classify documents by type of insurance and document subject matter (e.g., identifying one document as a policy certificate and another as the full policy wording document) and to extract information, such as policy numbers, features of the policy, price paid, etc., from the extracted text. The extracted initial dataset may be employed to further train the text and information extraction techniques.

Optionally, text extraction and information extraction are services that are performed by calling API endpoints within the data management system to extract data from data sources.

In an example, in a first step, the user sends an email and its attachments as received from their insurance provider. In a second step, text and information that could contribute to the user profile is extracted from the email and attachments using dedicated text extraction and information extraction techniques. In such cases, the text and information extraction techniques are configured to output at least one of: basic attributes of the policy (e.g., type of policy, details of the insurance service provider, an expiry date of the policy, price paid so far, upcoming renewal amount and date, and so on); policy features (e.g., key cover of £150 (GBP), 60 days driving in EU, and so on); personal features (e.g., spouse included, 6000 miles annual mileage, address where a vehicle is kept, whether a vehicle is kept in a garage, and so on) and asset features (e.g., vehicle registration plate). Beneficially, the use of text extraction and information extraction techniques may facilitate presentation of insurance policy features to the user in different contexts using methods such as source highlighting, policy querying and policy comparison; beneficially, the text extraction techniques utilize at least one of: deep neural networks, Boltzmann machine language models, Hidden Markov models, Born machines (see *"Differentiable Learning of Quantum Circuit Born Machine";* Jin-Guo Liu, Lei Wang; arXiv: 1804.041680), but not limited thereto. Additionally, beneficially, the text extraction techniques and information extraction techniques enable faster (and real-time) and accurate information extraction.

It will be appreciated that a real-time processing of the structured, unstructured or semi-structured data sources (namely, emails and documents) to extract information to use in a user's profile, the text extraction techniques need to be optimised. The optimized text extraction techniques enable one or more of: a layout analysis, classification/categorisation of sections, headings analysis, paragraph analysis, document reading order analysis, identification and extraction of information from tables by representing core information only (i.e., sparse representation) and creating vector representations of "chunks" of the text that allows for more quickly focussing a semantic search. Beneficially, such optimization enables a much less computationally expensive process to be realized, thereby allowing the processing of data in real-time and provide a quicker response (e.g., push notification, email or other message) to user input to confirm data input and to let the user review what has been extracted. Providing this as soon as possible after the user submits the information, gives reassurance that the unstructured or semi-structured data submitted has been received and processed and shows the user the extracted results while they are already engaged with the process.

Optionally, the processing arrangement is further configured to prompt the user to confirm an accuracy of the extracted user data. It will be appreciated that, although the text extraction and information extraction is an automated process, the processing arrangement may require the user to manually check for the accuracy of the extracted user data. The user may be alerted to a need to confirm data accuracy through various means, such as an email, text message, or a notification served from a mobile application or website, following which the user may confirm the accuracy of the extracted user data by providing inputs in response to the message or notification or via a UI within a mobile or web application. Once the user provides inputs indicative of the accuracy of the extracted user data, the processing arrangement may use these inputs to further train or improve deep learning or rules-based algorithms used to generate more accurate information extraction. Beneficially, the automated process ensures that the extracted user data is accurate and complete and may be used for further analysis or development of the insurance management system.

Optionally, user-supplied information sources relating to insurance policies may be supplemented by related data about such policies, wherein the related data may be retrieved from public information sources. In this regard, the term "public information" refers to information sources that are available on various platforms, such as a database maintained by the insurance service provider. Typically, the public information includes policy details/documents available on the insurance service provider's websites, portals, insurance offers, and the like. Beneficially, such information may be used alongside the user-supplied information to form a larger body ("corpus") of data from which to extract information about the user's existing insurance policies.

Optionally, while gathering the user data, the processing arrangement is further configured to:
- request one or more third-party application programming interfaces (APIs) to provide supplemental data related to the user data; and
- receive the supplemental data from the one or more third-party APIs.

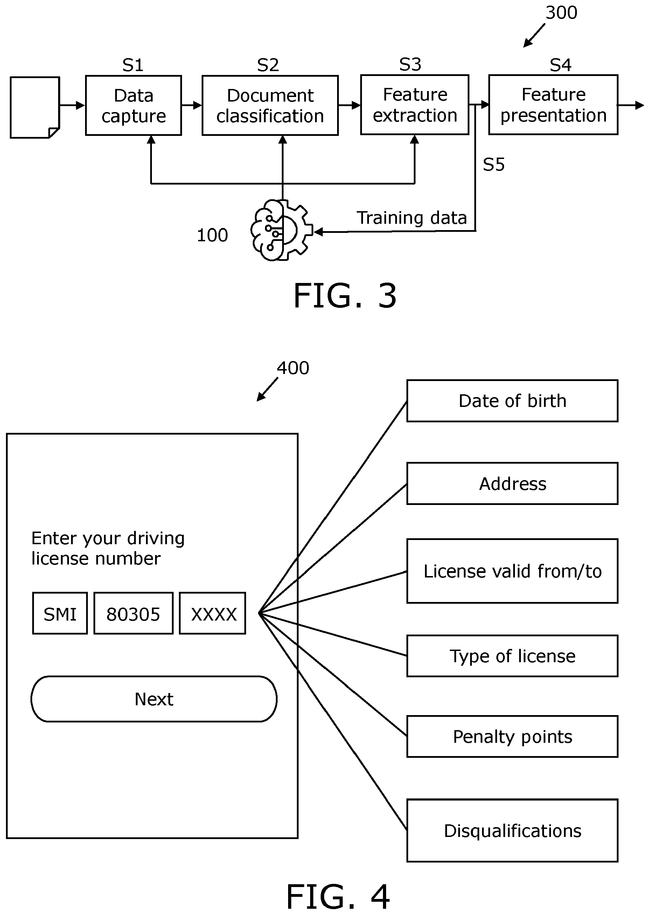

In this regard, the third-party API is requested, via servers thereof, for providing supplemental data or related services relevant to the available user data. In an example, the processing arrangement may be configured to access ("pull") a driver's information (such as a date of birth of the user, an address of the user, a validity period of the licence, a type of licence, penalty points and disqualifications) from a transport authority (a third-party API) when a basic information, such as a driving licence number, is input by the user (as exemplified in FIG. 4 as described below). Beneficially, supplemental data from the third-party API obviates a need for further data entry by the user, making data collection to set up an insurance profile much quicker and simpler and thereby improving customer experience, satisfaction and therefore retention.

Optionally, while gathering the user data, the processing arrangement may be configured to receive input from an Open Finance or Open Insurance API source. It will be appreciated that such data becomes available on these API sources and may be used as supplemental data.

Moreover, the processing arrangement is configured to generate an insurance profile of the given user based on the user data. The term "insurance profile" as used herein refers to a summary of a user's insurance-related information that is derived from the user data. This information is used to provide information and functions enabling users to manage their insurance policies, to obtain quotes for insurance products and services, to determine the user's insurance risk, and to inform which insurance products and services are relevant to the user. The user data used to create the insurance profile may include a variety of information such as demographic information (e.g., age, gender, location), financial information (e.g., income, debts), and health information (e.g., medical history, habits such as smoking). Typically, the resulting insurance profile includes, but is not limited to, information about existing insurance policies, information about relevant assets and information to run a quote for one or more new insurance policies. The insurance profile takes such information into account to provide a comprehensive view of the user's insurance needs and risk factors. Beneficially, the user's insurance profile enables the insurance companies to understand the user better and offer personalized insurance products and services that meet the user's specific needs and risk factors.

Furthermore, the user interface is configured to display the insurance profile of the given user, including details of the existing insurance policies and one or more user interface elements for receiving one or more user actions for managing of the existing insurance policies. In this regard, the insurance profile of the user is summarized, on the user interface, as an insurance wallet or insurance dashboard of the insurance profile of the user. The insurance wallet or dashboard is a type of software application that provides a centralized and user-friendly interface for users to manage their insurance policies. In this regard, the insurance dashboard or wallet provides a quick, consolidated and comprehensive overview of important information and data, often in real-time, through visual representations such as text, graphic elements, charts, graphs, and tables. The dashboard typically displays an overview of the user's insurance profile, including details of their current insurance policies and related information such as, but not limited to, corresponding service providers, corresponding asset types, renewal dates, and all such primary information about a given insurance policy that is required to identify the given insurance policy from amongst a plurality of insurance policies held by the user, as well as suitable user actions for managing the given insurance policy, such as cancelling the auto-renewal for the insurance policy, applying for a claim, pay premium, and so on. The term "one or more user interface elements" refer to buttons or links that allow the user to perform actions related to their insurance policies. The user may use the insurance wallet or insurance dashboard to view, edit, or update their insurance policies, and sometimes even purchase new insurance policies that are displayed on the user interface. Therefore, the purpose of the insurance wallet or dashboard is to simplify the process of managing insurance policies and provide users with a convenient and accessible way to keep track of their insurance information.

In an exemplary implementation, the user interface displays the insurance wallet or dashboard comprising key details of one or more insurance policies associated with the user, a details screen that lets the user to see more information for a given insurance policy and perform related actions (e.g., contact their insurer, cancel auto-renewal, start a claim), and an assistance screen. Using such a display, the users may track dates (e.g., see what is coming up, see what is not due for a while (i.e. "OK" and doesn't require action), see what is due and overdue and get reminders), take actions for an insurance policy (e.g., contact insurer, cancel auto-renewal, make a claim), see policy details (e.g., the insurance service provider, policy number, identifying the features covered for (facilitated by document processing and text and information extraction), documents, terms and conditions), use features for associated assets or categories (e.g., reminders, tracking and booking/purchase of products and services associated with assets like a vehicle (vehicle inspection, tax, service); home (mortgage, utilities, maintenance); travel (passport, visas, health insurance cards (e.g., EHIC)); health (immunisations); and so on.

Optionally, the processing arrangement is further configured to:
- analyse the user data to identify missing information for completion of the insurance profile of the given user;
- request the given user to provide inputs for the missing information; and
- complete the insurance profile of the given user based on the provided inputs.

It will be appreciated that "missing information" may specifically relate to information required for managing an existing policy (such as the renewal date) or information required to run a quote for a particular type of insurance (such as where a given vehicle is kept) or it may apply more broadly to the insurance profile. In this regard, the processing arrangement is configured to review the information in the user's insurance profile to identify any missing or incomplete information. Such analysis may be performed in an automated manner or initiated by the user. If any missing information is found, the processing arrangement requests the user to provide the missing information. Although the insurance profile generation and analysis may be an automated process, the user may nevertheless be required to manually check for any incomplete or wrong information in the insurance profile and provide inputs for the missing information wherever necessary. As aforementioned, the user may provide inputs for the missing information through various means, such as responding to notifications or via the user interface (UI) within a mobile or web software application. Once the user provides inputs for the missing information, the processing arrangement uses it to complete the user's insurance profile. The updated insurance profile will contain all the necessary information to proceed with the insurance service, such as processing claims, renewing insurance policies, and offering tailored and personalized insurance products and services. Beneficially, the process ensures that the insurance profile is accurate and complete, which will help the insurance service provider to provide better service and support to the user.

Optionally, the processing arrangement is further configured to:
- analyse user data for a single user or multiple users to identify one or more under-insured attributes or over-insured attributes in insurance coverage for the given user; and
- generate the insurance profile of the one or more users to include details about the identified one or more under- or over-insured attributes in the insurance coverage for those users.

The phrase "under-insured attributes or over-insured attributes in insurance coverage" refers to instances where there are deficiencies or redundancies in a given user's insurance coverage. In this regard, the term "under-insured" refers to situations where a user is not adequately covered by their insurance and could potentially face out-of-pocket expenses for certain events or situations. The term "over-insured" refers to situations where a user either has insurance coverage that provides insurance cover multiple times for the same event, or has policy features and coverage levels above and beyond their requirements; in each case, such an excess insurance cover potentially leads to the waste of resources as users are paying for insurance policies or features and coverage that they do not actually need. Examples of under-insured attributes may be a lack of coverage for specific risks, such as floods or earthquakes, insufficient coverage limits, such as low liability limits or low property coverage limits, and so forth. Examples of over-insured attributes may be a duplicate coverage, such as having two policies covering a same given risk, excessive coverage limits, such as high liability limits for a low-risk personal situation, and so forth. In essence, "one or more under-insured attributes or over-insured attributes in insurance coverage" means there may be a mix of situations where a user is under-insured or is over-insured. In this regard, the processing arrangement is configured to compare the insurance profile data about the user's policies and the insurance coverage provided thereby with asset data, their insurance preferences and other insurance profile data (e.g., across demographic) to provide an assessment of their coverage highlighting potential issues associated therewith. Beneficially, the identification and summarization of the one or more of gaps and overlaps in the insurance coverage helps the user to understand how well they are covered and prevents the user from being under-covered or over-covered. Optionally, the analysis of the insurance coverage may also include opportunities to combine products; in an example, for separate buildings and contents insurance products, there may be a single policy to cover both the buildings and contents insurance products. In another example, some insurance service providers may offer discounts for customers who take out both vehicle and home insurance. Beneficially, a combined insurance policy offers fewer points of contact and policies to manage compared to multiple single ones, and may offer a lower premium.

Optionally, the system is further configured to:
- share the one or more under-insured attributes and over-insured attributes for the one or more users with insurance service providers; and
- receive one or more customized insurance policies with respective details and price quotes targeting the one or more under-insured attributes and over-insured attributes for at least one of the multiple users.

In this regard, the system is configured to share the one or more under-insured attributes and over-insured attributes for the one or more users with insurance service providers either via the system API as an API provider or via insurance service provider APIs as an API consumer. The one or more under-insured attributes and over-insured attributes for the one or more users may be used to identify any gaps or over-coverage that may cause problems later. Such gaps or over-coverage may be rectified with one or more customized insurance policies that solve the limitations associated with any gaps or over-coverage associated with the one or more under-insured attributes and over-insured attributes for the one or more users. Optionally, the system employs one or more text-extraction algorithms to receive the one or more customized insurance policies from the insurance service providers that is better than a current policy with the one or more under-insured attributes and over-insured attributes for the one or more users. Beneficially, such customized policies may either target the needs of an individual user or needs for a different level of coverage identified from analysis across multiple users. Additionally, beneficially, such sharing of the one or more under-insured attributes and over-insured attributes for the one or more users with insurance service providers eliminates the need for the user to provide same or similar information again for each insurance service provider.

Optionally, the user interface is further configured to:
- provide at least one of the one or more customized insurance policies with the respective details and price quotes to the corresponding at least one of the multiple users for a selection thereby; and
- facilitate the corresponding at least one of the multiple users to subscribe to the one or more customized insurance policies based on the selection thereby.

The user interface provides or displays the customized insurance policies to the user for selection and subscription of the desired insurance policy thereby. Herein, the respective details and price quotes of the one or more customized insurance policies includes, but is not limited to, insurance coverage, cost of the insurance policy, duration of insurance policy, and so on.

Optionally, the data management system further comprises an application programming interface (API) that is configured to:
- provide an insurance service provider with access to the insurance profile of the given user; and
- receive one or more quotations for insurance policies with respective details and price quotes for the given user from the insurance service provider.

The insurance service provider needs access to retrieve and view information about a user's insurance requirements. Such information includes all details required to provide a quote and optionally may also include further details relating to the user, details of the user's existing policies (such as a policy types, coverage limits, premium amounts, and claims history) and details relating to the user's assets. In this regard, the insurance service provider may access the insurance profile through their own secure system. Beneficially, access to the insurance profile of the user allows the insurance service provider to better understand the user's insurance needs and provide more personalized and accurate advice and recommendations.

Optionally, the API includes cloud-hosted microservices, optionally with a load balancer in front of each microservice.

Optionally, the access to the insurance profile of the user may be via a single insurance service provider. In such a case, the single insurance service provider, such as a large financial institution, may use the user's insurance profile for its own purposes rather than sharing it with multiple partners or competitors, thereby protecting their client and products against a potential competition or acquisition. Alternatively, optionally, the access to the insurance profile of the user may be by multiple insurance service providers, such as insurance service providers, brokers, or third-party applications (namely, software application providers).

The phrase "quotations for insurance policies" as used herein refers to an estimate of the conditions (such as coverage, terms and cost) of an insurance policy provided by the insurance service provider to the user or a potential customer. The respective details include, but are not limited to, a type of insurance coverage, a set of features and level of cover, a length of the insurance policy, and a premium for the insurance coverage. Beneficially, comparing two or more quotations for the insurance policies with respective details and price quotes helps to determine which insurance policy best fits the user's needs and budget.

Optionally, the processing arrangement is further configured to:
- provide data from the insurance profile of the given user to an insurance service provider or providers via one or more API calls or other methods of transferring data; and
- receive one or more quotations for insurance policies with respective details and price quotes for the given user from the insurance service provider.

In this regard, the system is acting as an API consumer of the third party APIs run by the insurance providers. Such information may include all details required to run a quote. Provision of data to insurers would always be only with the user's consent and may be optionally triggered by a request (e.g., the user wants to compare prices) from the user, or timing (e.g., the user's existing policy is due to expire so new prices are requested on behalf of the user to present the user with alternatives for renewal).

Optionally, the user interface is further configured to:
- to provide at least one of the one or more quotations for insurance policies with the respective details and price quotes for a selection by the user; and
- facilitate the user to proceed to purchase policies from the one or more quotations for insurance policies based on the selection thereby.

That is, only some of the one or more quotations for insurance policies that offers the best coverage at an affordable price may be selected by the user and proceeded with.

In this regard, the at least one of the one or more quotations for insurance policies is provided by means of notification (as mentioned before) to the user or on a request by the user. Moreover, only upon receiving a user response to the notifications and or upon a request by the user, the at least one of the one or more quotations for insurance policies, that offers the best coverage at an affordable price, is provided to the user for the selection thereby. Moreover, the selected one or more quotations for insurance policies that fits the user's needs and budget may be purchased within the provided platform or by the user proceeding to the insurance service provider's website or the like. In this regard, if the user agrees with the terms and conditions of the selected at least one or more quotations for insurance policies, the user is required to pay the premium thereof in order to activate the insurance policy. Optionally, after activation, the insurance service provider may provide for association with the user's insurance profile information about the new policy, containing all the details of the insurance policy, including the coverage and terms and conditions thereof, in the form of either structured, semi-structured or unstructured data. For example, this may be *a json* file that may directly update the user's profile or alternatively it may be a PDF document which may be made available to the user in the user interface (UI) and also used as input to the text extraction and information extraction processes. It will be appreciated that after subscription to the insurance policy, the insurance policy will have to be renewed annually or as per the insurance policy term.

Optionally, policies that cover more than one of the user's existing policy may be offered for selection. In an example, if the user has two vehicles, each having a separate insurance policy, then the insurance management system of the present disclosure enables the user to determine a comprehensive policy that covers both vehicles in a single policy. Such a comprehensive policy may be selected by the user when at least one of the two separate insurance policies becomes inactive.

Optionally, the processing arrangement is further configured to request a consent from the given user to provide the access to the insurance profile thereof to the insurance service provider; the processing arrangement and API are further configured to:
- provide the access to the insurance profile of the given user to the insurance service provider upon receipt of the consent from the given user; or
- restrict the access to the insurance profile of the given user to the insurance service provider based on one or more of: insurance policies offered by the insurance service provider, characteristics of the insurance service provider, defined limited time period.

It will be appreciated that the user not only provides consent but manages consent or consent preferences, such as for giving access, revoking access, restricting access, updating preferences, and so on. The user has control over who may access their insurance profile and what information may be shared. Moreover, the API and processing arrangement allow the user to limit the time and extent of use of the insurance profile data. The insurance service provider must abide by the user's preferences and may only use the information according to the agreed upon terms. In this regard, only upon receiving the consent from the user, the insurance profile of the user is accessible to the insurance service provider. It will be appreciated that the user may revoke or modify the access at any time.

Optionally, the request for the consent from the user may be sought by providing a notification of attempt to access the user's insurance profile by an insurance service provider. Optionally, the notification may be any of: a text message notification (SMS or other messaging application), an email notification, a push notification (desktop, web or mobile), an in-app notification, a voice notification, and a light or sound notification (e.g. flashing light, beep).

Moreover, the access to the insurance profile of the user to the insurance service provider may be restricted based on one or more of: insurance policies offered by the insurance service provider, characteristics of the insurance service provider, a defined limited time period. The conditions "insurance policies offered by the insurance service provider, characteristics of the insurance service provider" relate to the services offered by the insurance service provider in the past and the present brand value (namely, reliability) of the insurance service provider. In this regard, the user may select the insurance service provider that may access the insurance profile thereof based on that user or other users' past experience with that insurance provider. For example, access may be prohibited for an insurance provider that had been rude, illegal, named in a scam, rated poorly for customer service by other users and so on. Additionally, access may be prohibited for an insurance provider that had in the past provided an under-covered, costly insurance policy, and the like.

Moreover, the defined time period of access may depend on the relevance of the information being sought. For example, an information corresponding to the insurance profile is relevant if it is sought within the policy's 'renewal window' but not outside that policy's 'renewal window'. In an example, a user's insurance profile may be accessed, during the 30 days preceding their current home insurance renewal date, by an insurance service provider to collect information required before providing a home insurance quote, as consented by the user. However, the insurance service provider may not be allowed to access any other data from within the profile at any other time. Optionally, the access of the insurance profile of the user to the insurance service provider may be associated with a time-stamp by recording the duration of time of said access.

Optionally, access to the insurance profile data is allowed in a way that the API consumers (such as insurance service providers and/or third-party APIs) are not able to process or store the raw data, but may still process the shared insurance profile data to return useful results to the user. In this regard, a combination of encryption, federated learning and multi-party computation may be used to allow for such a secure feature.

Optionally, the processing arrangement is further configured to:
- compare each of the one or more quotations for insurance policies to corresponding one of the existing insurance policies of the given user;
- shortlist a list of relevant insurance policies from the one or more quotations for insurance policies based on the comparison; and
- provide the list of relevant insurance policies with the respective details and price quotes for the selection by the given user.

Notably, one or more features of the one or more quotations for insurance policies are compared to corresponding one or more features of one of the existing insurance policies of the user. In this regard, comparing each of the one or more quotations for insurance policies to corresponding one of the existing insurance policies of the user enables selection of most relevant option that better suits the user requirements, based on features or requirements covered by existing policies. It will be appreciated that shortlisting a list of relevant insurance policies from the one or more quotations for insurance policies may be based on comparison and user stated preferences; for example, a previous policy may not have certain features, but the user has updated preferences to emphasize that such features are important to the user in new quotations for insurance. Moreover, a list of relevant insurance policies from the one or more quotations for insurance policies provides an opportunity to the user to compare and potentially switch insurance service providers, if the user is not satisfied with the user's current insurance service provider.

Optionally, the processing arrangement is configured to assign a score to each of the compared one or more quotations for insurance policies based on the corresponding one of the existing insurance policies of the user or any stated user preferences (e.g., expected mileage for the coming year or whether they want EU cover). Beneficially, such scoring approach allows the user and/or the insurance service provider to include or exclude results based on relevance and attractiveness of a new potential insurance policy. Moreover, the user does not want to be spammed with worse cover at a higher price and the insurance service providers want to know which users stand to benefit from their policies (and not burn their reputation and brand equity courting those for whom it will be a bad deal). Additionally, beneficially, this could also be used to allow the insurance service providers to benchmark their policies against competitors (either individually or in aggregate).

Optionally, the processing arrangement is further configured to process information about the existing insurance policies of the user to determine due dates for renewals thereof; and the user interface is further configured to display reminders to the given user based on the determined due dates for renewals.

In this regard, the processing arrangement is configured to provide insurance profile information, particularly about existing insurance policies, back to the user for the purposes of keeping track of the various requirements (such as renewal dates), checking features, and performing actions on a policy (such as contacting the insurance service provider, cancelling auto-renewals, making a claim, and so on). Optionally, such insurance profile information may be provided to the user by means of notifications (as discussed before). Beneficially, processing information and sending reminders to meet the due dates for renewals is important to allow the user to review and compare alternative policies before the renewal date and to ensure a continuous insurance coverage.

It will be appreciated that determining due dates for renewal is only one example of attributes of existing policies which are useful to display to the user (and build helpful features on top of). In the case of due date for renewals, there is a feature of reminders. However, there are other features, for example, once the insurance service provider is known, the user interface makes it easy for the user to communicate with the user's insurance service provider. Or, for example, given the insurance service provider and a policy number, the user interface makes it easy for the user to cancel auto-renewal of their policy.

Beneficially, the disclosed insurance management system is useful in tracking information about the user's insurance requirements, providing a comparison of the existing insurance policies with potential insurance policies, providing a comparison of coverage assessment, combining policies (i.e., single view of quoting across multiple different insurance lines), targeting only users who stand to benefit and not spamming the users who do not stand to benefit from the quoted insurance policy. Moreover, the disclosed insurance management system may present either users or partners aggregated insights (opportunities, trends, and the like) from different user groups' (or the entire database thereof) profiles.

Optionally, the data management system further comprises an application programming interface (API) that is configured to:
- provide access to the functions and services of the system to application providers; and
- with user consent, provide access to the insurance profile of the given user to the application provider.

The application providers may access some or all endpoints of the API to provide insurance management functions to their users within an application such as their website or existing mobile application. Beneficially, this allows users to access insurance features within the context of applications they already use, for example from their bank or other financial service providers.

In a second aspect, the present disclosure provides a method for using a data management system that is configured as an insurance management system to manage insurance requirements for a user, the method comprising:
- gathering user data comprising information about at least one of user profile, existing insurance policies, insurance preferences, and assets of a given user;
- generating an insurance profile of the given user based on the user data; and
- displaying the insurance profile of the given user, including details of the existing insurance policies and one or more user interface elements for receiving one or more user actions for managing of the existing insurance policies.

In this regard, the method may be implemented as a software application that is executable on computing hardware.

Optionally, the method further comprises
- providing access to or sending data from the insurance profile of the given user to an insurance service provider;
- receiving one or more quotations for insurance policies with respective details and price quotes for the given user from the insurance service provider;
- providing at least one of the one or more quotations for insurance policies with the respective details and price quotes for a selection by the given user; and
- facilitating the given user to proceed to purchase the one or more quotations for insurance policies based on the selection thereby.

Optionally, the method further comprises allowing the given user to share details of one or more insurance policies in the insurance profile with a contact thereof. It will be appreciated that access to the insurance profile by the user enables the user, in some cases, to choose to share some or all of the profile data with someone they trust, such as a family member, friend, or business partner. For example, the user may share the user's vehicle insurance data with someone to whom the user has lent the user's vehicle or share home insurance with the user's spouse.

In the following examples, trademark names *"Banka", "Switcha", "Hartings"* and *"Aliva"* are used only as example fictional trademark names, wherein the following is not intended to constitute any form of marketing for any companies associated with similar trademarks or to reflect any form of relationship with such companies.

In an exemplary use case scenario, a user has Hartings car insurance, Aliva home insurance and a current account with Banka. The user wants to make sure that it does not forget its insurance renewal dates so the user downloads a software application of the aforementioned insurance management system and forwards its Hartings and Aliva insurance emails to the insurance management system. It will be appreciated that 80%+ of all the information required to run vehicle and home insurance quotes is extracted from emails and documents. The application requests the user to provide answers to a few short questions, which together with the third-party API calls to supplement, complete the user data for the user's insurance profile. Banka offers vehicle and home insurance, and wants to make it easy for their current account holders to see if Banka policies may potentially save them money at renewal. Therefore, Banka offers the ability to connect to the user's insurance profile maintained with the aforementioned insurance management system application. The user accepts giving permission for Banka to access the user's insurance profile at renewal. At renewal, Banka accesses the data and sends the user a push notification in the user's mobile banking application. Banka presents its policies that have features that at least match the user's previous policy and a price that is better than the user's renewal quote. Banka only messages users where Banka may provide better cover or a better price or both, and refrain from sending notifications where the offers are inappropriate, for example a worse cover at a higher price. The user is happy because it has identified a favourable deal that it would not otherwise have known for no extra effort. Banka is happy because Banka has engaged a new insurance customer that Banka would not have otherwise have had, and may continue to engage the user with insurance features through the mobile banking application that the consumer is already using.

In another exemplary use case scenario, a user wants to search the entire market for new a vehicle insurance policy at renewal. The user already has a completed insurance profile managed by the aforementioned insurance management system application. The user goes to a new switching service, Switcha, and authorises for the user's completed insurance profile to be shared with Switcha. Switcha runs the quote for the user at just a right time to optimise prices and presents new policies side-by-side with the user's existing policy showing exactly where each new policy is better or worse than the policy that the user already has. The user is happy because the decision-making process has been made easier and considers more than just price. The switching service, Switcha, is happy because users are less likely to be indecisive and more likely to act on a decision; moreover, Switcha are more likely to retain their users who now trust the service is genuinely interested in offering them value-for-money as opposed to simply the lowest price.

### DETAILED DESCRIPTION OF DRAWINGS

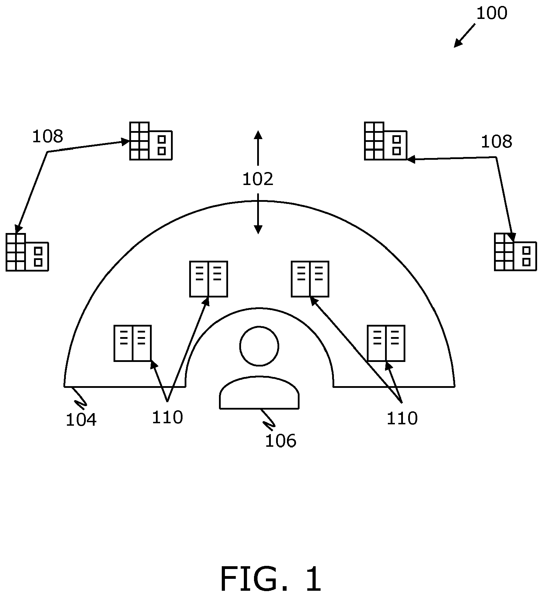

Referring to FIG. 1, there is shown a schematic illustration of a data management system that is configured as an insurance management system **100,** in accordance with an embodiment of the present disclosure. The insurance management system **100** comprises a processing arrangement and a user interface (neither shown). The processing arrangement is configured:
(i) to gather user data comprising information **110** about at least one of user profile, existing insurance policies, insurance preferences, and assets of the user; and
(ii) generate an insurance profile **104** of the user **106** based on the user data.

The user interface is configured to display the insurance profile **104** of the user **106,** including details of the existing insurance policies and one or more user interface elements (not shown) for receiving one or more user actions for managing of the existing insurance policies.

Moreover, the insurance management system **100** further comprises an application programming interface (API) **102,** wherein the API **102** is configured to function as an API provider, and wherein the API **102** is also configured to access third party APIs **102** acting as an API consumer. The APIs **102** are configured to provide data from the insurance profile **104** of the user **106** to an insurance service provider or application provider **108,** and to receive one or more quotations for insurance policies with respective details and price quotes for the user **106** from the insurance service provider **108.** Herein, the insurance service providers or application providers **108** may be insurers, brokers, agents, comparison sites, banks, other financial services organizations, or organizations with existing mobile or web applications or properties.

Moreover, the user interface is further configured to provide at least one of the one or more quotations for insurance policies with the respective details and price quotes for a selection by the user **106;** and facilitate the user **106** to subscribe to the one or more quotations for insurance policies based on the selection thereby.

Moreover, the processing arrangement is further configured to analyse insurance profiles **104** of multiple users (such as the user **106**); and determine one or more of under-insured attributes and over-insured attributes for the multiple users (such as the user **106**) based on the analysis. The APIs **102** are further configured to share the one or more of under-insured attributes and over-insured attributes for the multiple users (such as the user **106**) with the insurance service providers **108**, and to receive one or more customized insurance policies with respective details and price quotes targeting the one or more of under-insured attributes and over-insured attributes for at least one of the multiple users (such as the user **106**). The user interface is further configured to provide at least one of the one or more customized insurance policies with the respective details and price quotes to the corresponding at least one of the multiple users (such as the user **106**) for a selection thereby, and to facilitate the corresponding at least one of the multiple users (such as the user **106**) to subscribe to the one or more customized insurance policies based on the selection thereby.

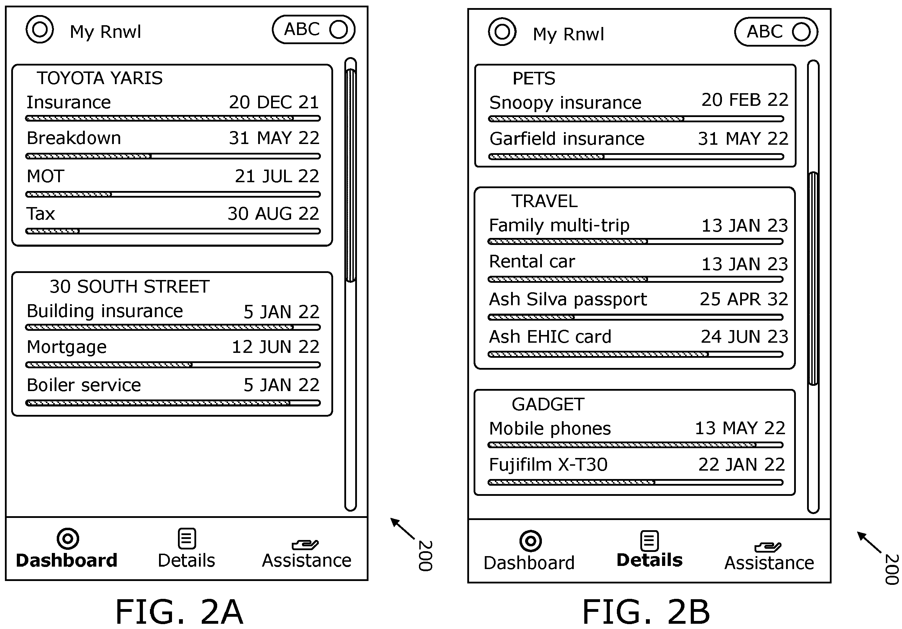

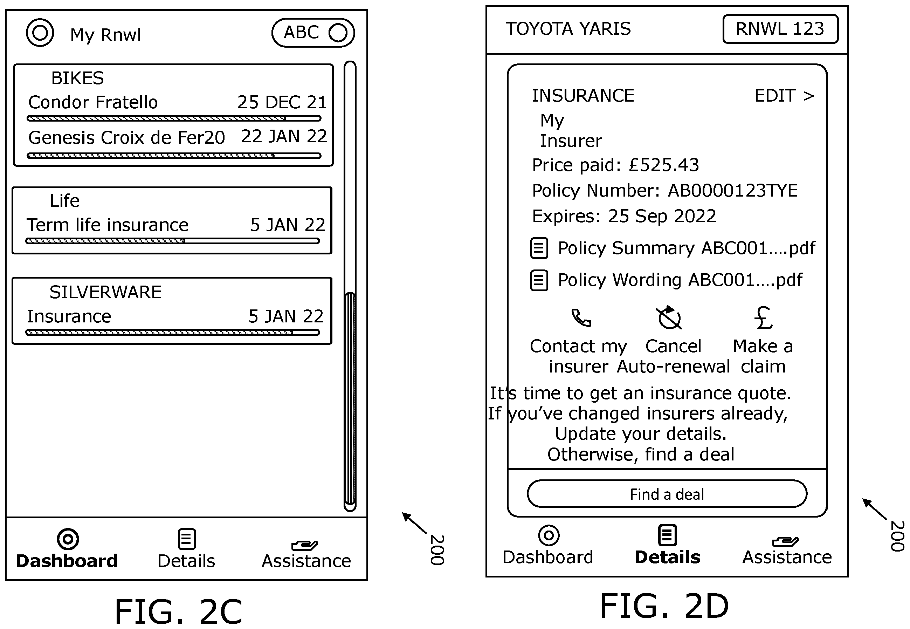

Referring to FIGs. 2A-2D, there is shown an illustration of a user interface **200,** according to an embodiment of the present disclosure. As shown in FIGs. 2A-2C, the user interface displays the insurance wallet or dashboard comprising key details of one or more insurance policies associated with the user. As shown, the top left part of the user interface displays a logo of the insurance management system, the top right part of the user interface displays a button to display the profile of the user. The bottom part of the user interface displays buttons corresponding to the different views of the user interface, namely the 'Dashboard', 'Details' and 'Assistance', wherein the 'Dashboard' is in 'Bold' font to show that currently the user is viewing a Dashboard screen. The middle part of the user interface consolidates asset types or insurance categories for different insurance policies held by the user along with associated dates the user may be tracking for the asset or category, e.g., 'Toyota Yaris' ('Insurance', 'Breakdown, 'MOT', 'Tax'); '30 South Street' ('Building insurance', 'Mortgage', 'Boiler service'); 'Pets' ('Snoopy and Garfield insurances'); 'Travel' ('Family multi-trip', 'Rental car', 'Ash Silva passport', 'Ash EHIC card'); 'Gadget' ('Mobile phone', 'Fujifilm X-T30'); 'Bikes' ('Condor Fratello', 'Genesis Croix de Fer20'); 'Life' ('Term life insurance'); and 'Silverware' ('Insurance'). It will be appreciated that trademark names Toyota, Yaris, Fujifilm X-T30, Condor Fratello, Genesis Croix de Fer are presented as examples only and include registered and unregistered trademarks. As shown, corresponding to each of the above-mentioned insurance policies and associated dates the user may be tracking, a date is displayed as a reminder for a desired action from the user.

As shown in FIG. 2D, the user interface displays a details screen that provides the user with more visual information for a given insurance policy and allows the user to perform related actions (e.g., contact their insurer, cancel auto-renewal, start a claim). As shown, a top left part of the user interface displays an asset, namely 'Toyota Yaris', the top right part of the user interface displays an identifier of the asset (such as a license plate for a vehicle or an address for a property) corresponding to the asset. A bottom part of the user interface displays buttons corresponding to the different views of the user interface, namely the 'Dashboard', 'Details' and 'Assistance', wherein the 'Details' is in a 'Bold' font to show that currently the user is viewing a 'Details' screen. The middle part of the user interface displays details corresponding to the insurance policy as selected by the user for viewing details thereof. As shown the details include 'Price paid', 'Policy number', 'Expiry Date', 'Policy summary Document', 'Policy Wording Document'; buttons to 'Contact insurance service provider', 'Cancel auto-renewal', 'Make a claim', and 'Find a deal'; and corresponding policy documents.

Referring to FIG. 3, there is shown a block diagram of a process **300** for extracting information from user data, in accordance with an embodiment of the present disclosure. As shown, the insurance management system (such as the insurance management system **100** of FIG. 1) receives supplied user data, such as in a form of emails or documents.

Subsequently, at a stage S1, the received data is captured by saving files and text to a database and optionally by using one or more text extraction techniques. At a stage S2, the documents are classified to facilitate further processing. At a stage S3, policy details are extracted using one or more information extraction techniques. At a stage S4, the extracted insurance policy features are presented to the user in different contexts, for example using methods such as source highlighting, policy querying and policy comparison. The user may be provided an opportunity to further analyse and confirm that the extracted data is accurate and complete. At a stage S5, processed data from stages S1 to S4 is used for training the one or more text extraction techniques or the one or more information extraction techniques.

Referring to FIG. 4, there is shown a schematic illustration of a user interface **400** for user data input by the data management system, in accordance with an embodiment of the present disclosure. As shown, the user data requires details corresponding to a driving licence number. Based on the details entered by the user, the insurance management system (such as the insurance management system **100** of FIG. 1) is configured to call a third party API in order to gather associated details for populating the user's insurance profile, such as a date of birth of the user, an address of the user, a validity period of the licence, a type of licence, penalty points and disqualifications.

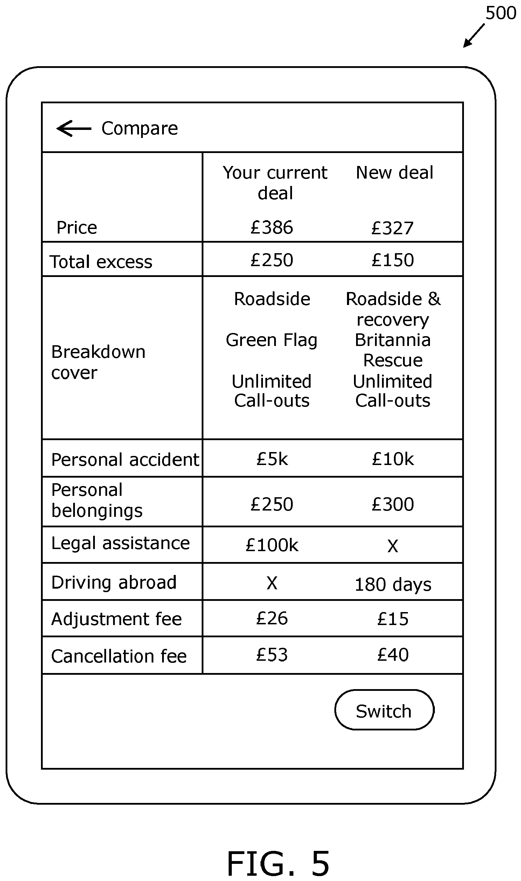

Referring to FIG. 5, there is shown an exemplary illustration of a user interface **500** for comparing two policies, according to an embodiment of the present disclosure. As shown, a quotation for an insurance policy with respective details and price quote for the user is compared with corresponding details of the user's existing policy to facilitate the user making an informed decision about a new policy. As shown, the comparison of insurance policies with respective details and prices for the user are displayed on a user interface of a user device, implemented as a smartphone.

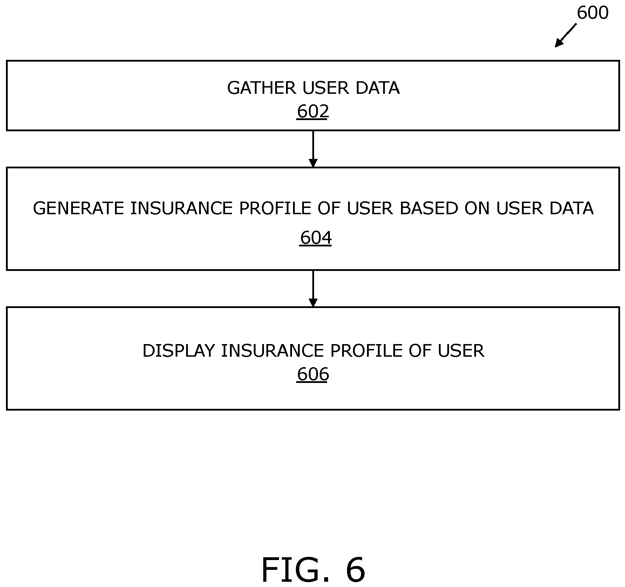

Referring to FIG. 6, there is shown a flowchart **600** depicting steps of a method for managing insurance requirements for a user, according to an embodiment of the present disclosure. At a step **602,** user data comprising information about at least one of user profile, existing insurance policies, insurance preferences, and assets of the user is gathered. At a step **604,** an insurance profile of the user is generated based on the user data. At a step **606,** the insurance profile of the user, including details of the existing insurance policies and one or more user interface elements for receiving one or more user actions for managing of the existing insurance policies, is displayed.

The aforementioned steps are only illustrative and other alternatives may also be provided where one or more steps are added, one or more steps are removed, or one or more steps are provided in a different sequence without departing from the scope of the claims herein.

Modifications to embodiments of the present disclosure described in the foregoing are possible without departing from the scope of the present disclosure as defined by the accompanying claims. Expressions such as "including", "comprising", "incorporating", "have", "is" used to describe and claim the present disclosure are intended to be construed in a non-exclusive manner, namely allowing for items, components or elements not explicitly described also to be present. Reference to the singular is also to be construed to relate to the plural.

## Claims

1. A data management system configured as an insurance management system (100) comprising:
- a processing arrangement configured to:
- gather user data comprising information (110) about at least one of user profile, existing insurance policies, insurance preferences, and assets of a given user (106); and
- generate an insurance profile (104) of the given user based on the user data; and
- a user interface (200, 400, 500) configured to display the insurance profile of the given user, including details of the existing insurance policies and one or more user interface elements for receiving one or more user actions for managing of the existing insurance policies.

2. The data management system according to claim 1, further comprising an application programming interface (API) (102) configured to:
- provide an insurance service provider (108) with access to the insurance profile (104) of the given user (106); and
- receive one or more quotations for insurance policies with respective details and price quotes for the given user from the insurance service provider.

3. The data management system according to claim 1, wherein the processing arrangement is further configured to:
- provide data from the insurance profile (104) of the given user (106) to an insurance service provider (108) via an API call or otherwise; and
- receive one or more quotations for insurance policies with respective details and price quotes for the given user from the insurance service provider.

4. The data management system according to claims 2 and 3, wherein the user interface (200, 400, 500) is further configured to:
- provide at least one of the one or more quotations for insurance policies with the respective details and price quotes for a selection by the user (106); and
- facilitate the user to proceed to purchase from the one or more quotations for insurance policies based on the selection thereby.

5. The data management system according to any one of the preceding claims, wherein while gathering the user data, the processing arrangement is configured to:
- request the given user (106) to send information (110) related to at least one of the existing insurance policies;
- receive the information related to at least one of the existing insurance policies from the given user; and
- process the information related to at least one of the existing insurance policies by implementing one or more of: text extraction techniques and information extraction techniques, to extract the user data therefrom.

6. The data management system according to any one of preceding claims, wherein while gathering the user data, the processing arrangement is further configured to:
- request one or more third-party application programming interfaces (APIs) (102) to provide supplemental data related to the user data; and
- receive the supplemental data from the one or more third-party APIs.

7. The data management system according to any one of preceding claims, wherein the processing arrangement is further configured to:
- analyse the user data to identify missing information (110) for completion of the insurance profile (104) of the given user (106);
- request the given user to provide inputs for the missing information; and
- complete the insurance profile of the given user based on the provided inputs.

8. The data management system according to any one of the preceding claims, wherein the processing arrangement is further configured to:
- analyse user data for a single user (106) or multiple users to identify one or more under-insured attributes or over-insured attributes in insurance coverage for the given user; and
- generate the insurance profile (104) of the one or more users to include details about the one or more under- or over-insured attributes in the insurance coverage for those users;
the API is further configured to:
- share the one or more of under-insured attributes and over-insured attributes for the one or more users with insurance service providers; and
- receive one or more customized insurance policies with respective details and price quotes targeting the one or more under-insured attributes and over-insured attributes for at least one of the multiple users; and
the user interface (200, 400, 500) is further configured to:
- provide at least one of the one or more customized insurance policies with the respective details and price quotes to the corresponding at least one of the multiple users for a selection thereby; and
- facilitate the corresponding at least one of the multiple users to subscribe to the one or more customized insurance policies based on the selection thereby.

9. The data management system according to any one of claims 2 to 8, wherein:
the processing arrangement is further configured to:
- request a consent from the given user (106) to provide the access to the insurance profile (104) thereof to the insurance service provider (108); and
the API is further configured to:
- provide the access to the insurance profile of the given user to the insurance service provider upon receipt of the consent from the given user; or
- restrict the access to the insurance profile of the given user to the insurance service provider based on one or more of: insurance policies offered by the insurance service provider, characteristics of the insurance service provider, defined limited time period.

10. The data management system according to any one of preceding claims, wherein the processing arrangement is further configured to:
- compare each of the one or more quotations for insurance policies to corresponding one of the existing insurance policies of the given user (106);
- shortlist a list of relevant insurance policies from the one or more quotations for insurance policies based on the comparison; and
- provide the list of relevant insurance policies with the respective details and price quotes for the selection by the given user.

11. The data management system according to any one of preceding claims, wherein the processing arrangement is further configured to:
- process information (110) about the existing insurance policies of the given user (106) to determine due dates for renewals thereof; and
the user interface (200, 400, 500) is further configured to:
- display reminders to the given user based on the determined due dates for renewals.

12. The data management system according to any one of the preceding claims, further comprising an application programming interface (API) (102) configured to:
- provide access to the data management system to an application provider (108); and
- provide access to the insurance profile (104) of the given user (106) to the application provider.

13. A method for using a data management system configured as an insurance management system (100) to manage insurance requirements for a user (106), the method comprising:
- gathering user data comprising information (110) about at least one of user profile, existing insurance policies, insurance preferences, and assets of the user;
- generating an insurance profile (104) of the user based on the user data; and
- displaying the insurance profile of the user, including details of the existing insurance policies and one or more user interface elements for receiving one or more user actions for managing of the existing insurance policies.

14. The method according to claim 13, further comprising
- providing access to or sending data from the insurance profile (104) of the given user (106) to an insurance service provider (108);
- receiving one or more quotations for insurance policies with respective details and price quotes for the given user from the insurance service provider;
- providing at least one of the one or more quotations for insurance policies with the respective details and price quotes for a selection by the given user; and
- facilitating the given user to proceed to purchase the one or more quotations for insurance policies based on the selection thereby.

15. The method according to claim 13 or 14 further comprising allowing the given user (106) to share details of one or more insurance policies in the insurance profile (104) with a contact thereof.
